# EUROPEAN PATENT SPECIFICATION

(11) **EP 3 099 159 B1**
(45) Date of publication and mention of the grant of the patent: **30.12.2020**
(21) Application number: 15700795.6
(22) Date of filing: 20.01.2015
(51) Int. Cl.: A01M 1/14, A01M 1/22, A01M 1/04

(54) **INSECT CAPTURING DEVICE**
INSEKTENFALLE
PIÈGE À INSECTES

(30) Priority: 28.01.2014 GB 201401451
(43) Date of publication of application: 07.12.2016
(73) Proprietor: Killgerm Group Limited, Ossett, Yorkshire WF5 9AJ (GB)
(72) Inventor: MCGOWAN, Neil, Ossett Yorkshire WF5 9AJ (GB); LEIGH, Zaphod, Ossett Yorkshire WF5 9AJ (GB)
(74) Representative: Burton, Nick
(86) International application number: PCT/GB2015/050121
(87) International publication number: WO 2015/114310

(56) References cited:
- WO-A1-2013/132230
- WO-A2-2009/143471
- CN-U- 202 122 028
- DE-U1-202006 015 719
- JP-A- S6 455 137
- KR-B1- 101 137 413

## Description

### FIELD OF THE INVENTION

This invention relates to an insect capturing device.

### BACKGROUND OF THE INVENTION

Known insect capturing devices typically use UV light having a wavelength approximately in the range 300nm ≤ λ ≤ 400nm to attract insects onto an insect disabling portion such as a glue board or a high voltage killing grid provided within a housing. The UV light is produced using a fluorescent tube.

For example, WO 2012/104598 A1 describes an insect catching device which comprises a housing. A radiation source which attracts insects is mounted inside the housing and an insect catching member is located within the housing. The insect catching member has a catching surface on which an amount of an adhesive material is provided. The front portion of the housing defines an aperture which allows insects to enter the housing and be caught on the adhesive material. The housing defines a vent located separately from the aperture and positioned to create an airflow into the housing by convection resulting from the heat generated by the radiation source during use of the device.

In another example, US 2003/0089023 describes an insect trap using attractant light displayed on a projection surface. The insect trap can be mounted on a vertical surface or on a ceiling surface. The wall-mounted housing forms an upwardly facing opening for facilitating entry of flying insect pests and for the reflection of light onto the vertical surface. The ceiling-mounted housing has a lateral opening for facilitating entry of pests and for reflection of light onto the ceiling and/or opposite wall. Insects that enter the trap are immobilized on an adhesive surface within the trap.

DE 20 2006 015719 U1 describes an insect trap having high-voltage grids mounted on either side of a double-sided mirror. LED's are mounted between the mirror and the grids to attract the insects.

JP S64 55137 A describes a lighting insect catcher having a reflecting mirror for reflecting light from an insect luring lamp forward. The mirror is provided at the back of the lamp and tacky surfaces for catching insects are provided at the back of the reflecting mirror.

WO 2013/132230 describes an insect disablement device including an insect disablement housing adapted to disable an insect, an electromagnetic radiation source for attracting the insect which is mounted to the insect disablement housing and which is capable of pulsed emission of electromagnetic radiation at a plurality of pulse frequencies and a controller mounted to the insect disablement housing which is connected to the electromagnetic radiation source. During use of the device, the controller enables the electromagnetic radiation source to pulse at a first pulse frequency for a first period of use and pulse at a second pulse frequency for a second period of use.

WO 2009/143471 an insect trap comprises a housing, an ultraviolet light with a peak wavelength of 340 to 380 nm operatively connected to the housing, and a bait including an attractant proximate the ultraviolet light. The ultraviolet light and the bait in the housing have a synergistic effect that is greater than a sum of the ultraviolet light alone and the bait alone.

### SUMMARY OF THE INVENTION

Aspects of the invention are set out in the accompanying independent and dependent claims. Combinations of features from the dependent claims may be combined with features of the independent claims as appropriate and not merely as explicitly set out in the claims.

According to an aspect of the invention, there is provided an insect capturing device comprising:
a housing;
first and second reflection surfaces;
an insect disabling portion located in between the first and second reflection surfaces; and
one or more light emitting diodes (LEDs) operable to emit light for attracting insects; wherein the LEDs are oriented inwardly with respect to the housing so that light emitted by the LEDs does not leave the housing directly, wherein the LEDs are oriented to direct light onto the reflection surfaces for reflecting said light out from the housing to attract insects onto the insect disabling portion, wherein the light reflected out from the housing by the first reflection surface is directed across the insect disabling portion in a first direction, and wherein the light reflected out from the housing by the second reflection surface is directed across the insect disabling portion in a second direction, thereby to create a region in front of the housing in which insects are attracted inward towards the insect disabling portion.

Improvements in the technology of high quality LEDs can enable them to exceed the energy efficiency of traditional fluorescent tubes. Fluorescent tubes also use mercury and their construction and subsequent disposal is not considered to be environmentally friendly. This is compounded by the fact that fluorescent tubes have a relatively short lifetime and frequently need to be replaced (e.g. annually, which can be compared with the lifetime of a typical LED which may be substantially longer).

Although it may be desirable to use LEDs in an insect capturing device for the reasons noted above, it has been found that the intense direct light emitted from LEDs is less effective in attracting insects. Embodiments of this invention can allow this problem to be solved by providing a reflection surface from which light emitted from LEDs can be reflected out from the housing of the device.

LEDs, particularly SMD LEDs, can produce intense light which can cause temporary or permanent eye and skin damage in a person exposed to the insect capturing device. This problem is solved by preventing light emitted by the LEDs from leaving the housing directly. In some embodiments, the majority of the light produced by the LEDs leaves the housing of the device via the reflection surfaces.

The insect disabling portion is located in between the reflection surfaces. Light reflected out from the housing by each reflection surface can be directed across the insect disabling portion. The effect of this is to create a region in front of the housing within which insects are attracted inward towards the insect disabling portion located toward the center of the arrangement.

In one embodiment, the reflection surfaces are located on an interior surface of the housing adjacent the insect disabling portion. Locating the reflection surfaces adjacent the insect disabling portion can improve the rate at which insects, attracted by the light reflected from the reflection surfaces, land on the insect disabling portion.

According to an embodiment of the invention, the reflection surfaces can be configured to diffuse the light reflected out from the housing. It has been found that insects are particularly attracted to diffuse light, so that diffuse light reflected out from the housing improves the effectiveness with which insects are attracted onto an insect disabling portion. Additionally, by diffusing the reflected light, potential damage to the eyes of a person looking at the reflection surfaces can be prevented. In one embodiment, the reflection surfaces can be an anodised metal surface. For example, matt anodised aluminium can be used.

The reflection surfaces can be substantially flat. Alternatively, the reflection surfaces may be curved.

The reflection surfaces can be located next to the insect disabling portion on a common surface of a panel located within the housing. In another example, the reflection surfaces can be located behind the insect disabling portion for example behind a high voltage killing grid. In a further example, the reflection surfaces can itself form at least a part of the insect disabling portion. For instance the reflection surfaces can comprise a set of reflective plates that act as electrodes to form a high voltage killing grid. In yet a further example, the reflection surfaces can be located on the insect disabling portion, for example as reflection surfaces mounted on a glue board.

The LEDs may be oriented in the range from 100° to 170°, preferably from 110° to 160°, more preferably from 120° to 150°, especially preferably from 130° to 140° with respect to a surface normal **n** of each reflection surface.

In one embodiment, a reflector can be included for directing light emitted by the LEDs onto each reflection surface. In this way, the amount of stray light falling upon a glue board that may be received in the insect disabling portion can be reduced. Light falling on the glue board can otherwise lead to drying of the glue, reducing the effectiveness of the board in capturing insects that land upon it. The reflector can also act to concentrate the light produced by the LEDs onto each reflection surface, thereby maximising the light reflected out from the housing. The reflector can further act to prevent stray light emitted by the LEDs from leaving the housing of the device directly, which can otherwise lead to eye or skin damage in a person exposed to the insect capturing device. The reflector can, for example, be a reflector cone such as a parabolic reflector cone.

In one embodiment, a barrier can be positioned between the insect disabling portion and each reflection surface, again for reducing the amount of light emitted by the LEDs that falls on a glue board that may be received in the insect disabling portion.

In one embodiment, more than two reflection surfaces can be provided. The insect disabling portion can be located in between the reflection surfaces. Light reflected out from the housing by each reflection surface can be directed across the insect disabling portion. The effect of this is to create a region in front of the housing within which insects are attracted inward towards the insect disabling portion located toward the center of the arrangement.

According to an embodiment of the invention, the LEDs can be surface-mounted devices (SMDs). LEDs of this kind generally have higher output power, higher power density, and have a lower cost per Watt of output power than through-hole bulb LEDs. While SMD LEDs typically use a glass lens, through-hole bulb LEDs use an epoxy coating that can degrade over time (particularly when light in the UV spectrum is used). SMD LEDs often have a wide viewing angle. This can make it difficult to extract the light emitted from a SMD LED from the insect capturing device. However, this problem can be solved using the focusing and reflection techniques described herein. Since SMD LEDs can produce a large amount of heat, one or more heat sinks in thermal contact with the housing and the LEDs can be used. The heat sink(s) may be provided with fins to aid in the dissipation of heat to the surrounding environment.

The insect disabling portion can be implemented as, for example, a glue board receiving space. In an alternative embodiment, the insect disabling portion can include one or more electrodes to which a high voltage (e.g. a few kV) can be applied. It is also envisaged that the insect disabling portion may include a combination of features such as a glue board receiving space in addition to one or more electrodes.

According to another aspect of the invention, there is provided a method for capturing insects. The method includes providing an insect capturing device of the kind described above, the insect capturing device having an insect disabling portion. The method also includes operating the LEDs to emit light for attracting insects.

According to an embodiment of the invention, where the insect disabling portion comprises a glue board receiving space, the method can further include replacing a glue board received in the glue board receiving space. The glue board can be replaced at regular intervals (e.g. weekly, monthly) or can be replaced as and when the board has been filled with insects or impaired by the accumulation of dust.

### BRIEF DESCRIPTION OF THE DRAWINGS

Embodiments of the present invention will be described hereinafter, by way of example only, with reference to the accompanying drawings in which like reference signs relate to like elements and in which:
Figure 1 shows an insect capturing device in accordance with an embodiment of the invention;
Figure 2 shows the insect capturing device of Figure 1 with the front grille in an open position;
Figure 3 shows a close up view of the arrangement of an insect disabling portion and a reflection surface comprised in an insect capturing device in accordance with an embodiment of the invention;
Figure 4 shows the arrangement of one or more light emitting diodes (LEDs) in an insect capturing device in accordance with an embodiment of the invention;
Figure 5 shows a cross section of an insect capturing device in accordance with an embodiment of the invention; and
Figures 6 to 8 each show cut-away views of an insect capturing device in accordance with an embodiment of the invention.

### DETAILED DESCRIPTION

Embodiments of the present invention are described in the following with reference to the accompanying drawings.

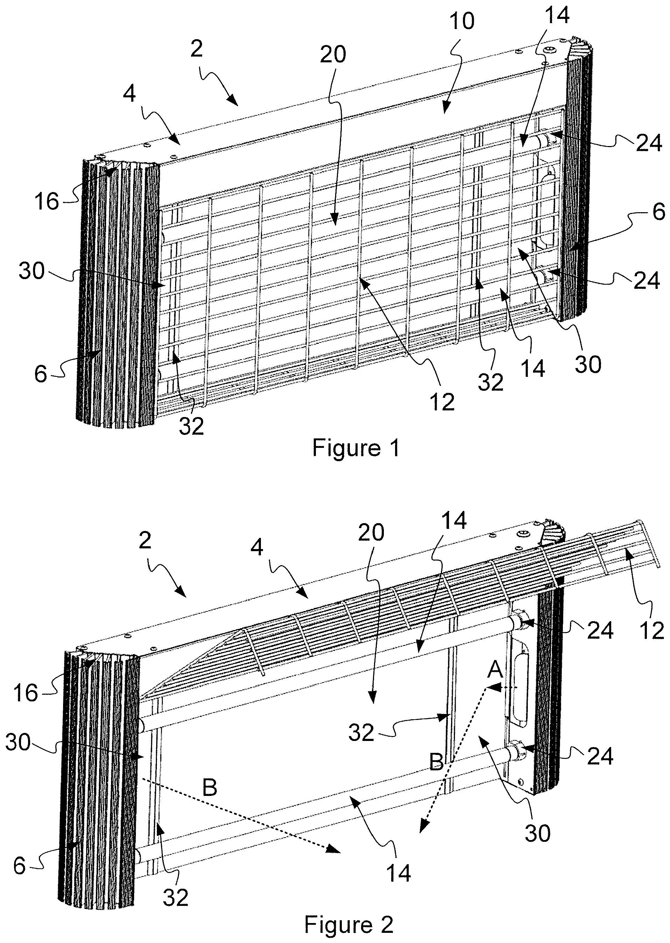

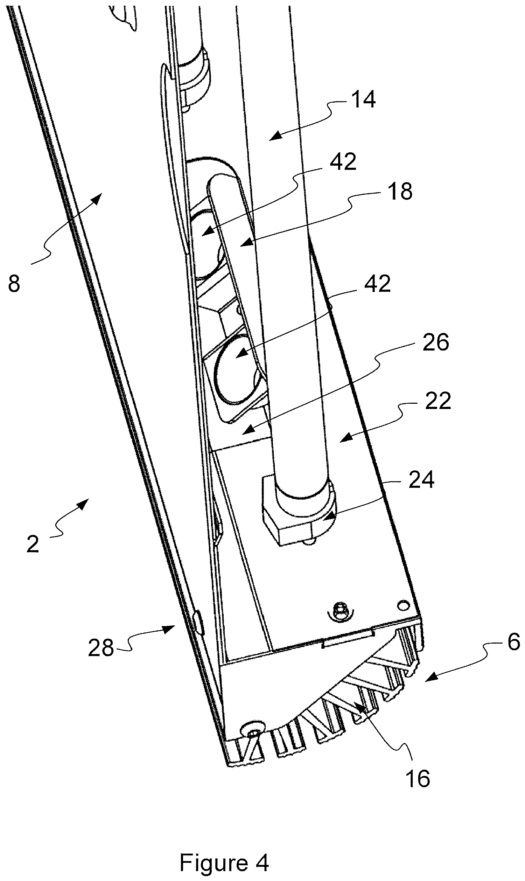

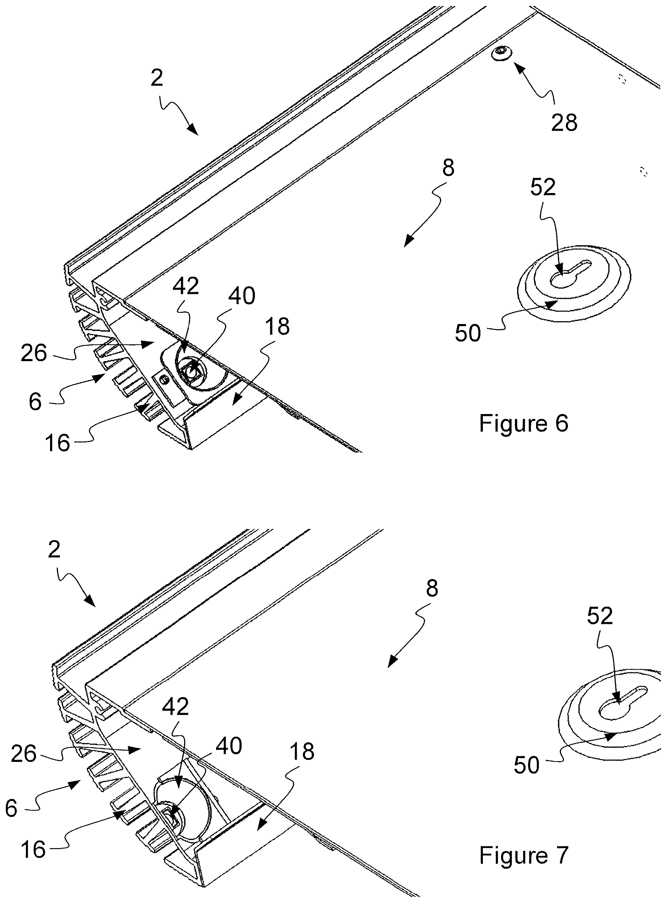

Figure 1 illustrates an insect capturing device 2 in accordance with an embodiment of the invention. The insect capturing device includes a housing 10. The housing 10 forms an enclosure that contains various components of the device 2 such as one or more light emitting diodes 40 and an insect disabling portion 20 as will be described in greater detail below. The housing 10 in this example includes a top section 4, a grille 12 which is provided at the front of the housing 10, a back section 8 (see Figures 4-7) and two side portions, which in this embodiment are provided in the form of heat sinks 6 including a plurality of heat sink fins 16. The features of the housing 10 of the insect capturing device can be constructed using any suitable material. In the present example, metals such as aluminium or stainless steel have been used.

In Figure 1, the grille 12 is shown in a closed position. The grille 12 allows insects that are attracted to the insect capturing device 2 to enter the housing 10 and land on an insect disabling portion 20 located therein. The grille 12 also allows light produced by one or more LEDs and/or fluorescent tubes provided within the housing 10 to exit the housing 10 (typically through the grille 12) to attract insects.

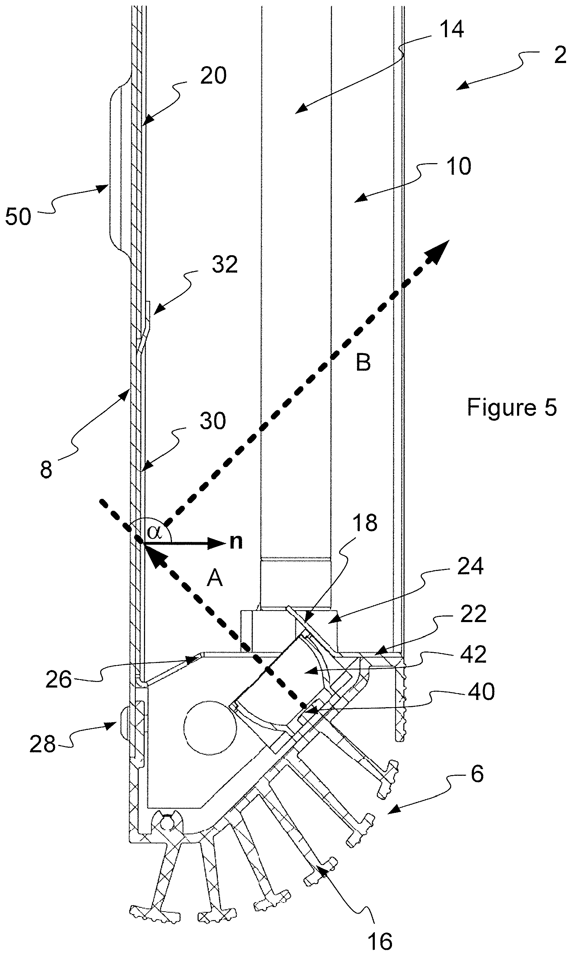

In the present example, the insect capturing device 2 is wall mountable. Features such as hooks or pegs or holes for screws can be provided to mount the device on a wall. In this example, the insect capturing device 2 is provided with a mounting feature 50 incorporating a slot 52 on the back portion 8 for receiving a screw or nail located on a wall (see Figures 5 to 8).

Figure 2 shows the insect capturing device 2 of Figure 1 with the grille 12 in an open position. The grille 12 can, for example, be pivoted at one end to allow it to swing away from the remainder of the housing 10, thereby to allow access to the interior of the housing 10. This can, for example, allow replacement of a glue board (see below) or other components such as the LEDs described below and/or any fluorescent tubes 14 located within the housing 10. Additionally, opening the grille 12 can allow access to the interior of the housing 10 for cleaning.

In the present example, the insect capturing device 2 is provided with one or more fluorescent tubes 14, which can be conventional in nature. The fluorescent tubes 14, where provided, can be located within housing 10 and installed within sockets 24. However, these fluorescent tubes 14 are provided merely to supplement the light provided by the LEDs described below and are not considered to be essential to this invention. Accordingly, in alternative embodiments, insect capturing devices having no fluorescent tubes 14 may be provided and in such cases insects are attracted to the insect capturing device 2 purely by the light emitted from the LEDs.

The insect capturing device 2 includes an insect disabling portion 20. In the present example, the insect disabling portion 20 comprises a glue board receiving space. The glue board receiving space can be a generally flat area provided on an interior surface of the housing 10 within which a glue board can be inserted. Glue boards are well known in the field of insect capturing devices and typically comprise a sheet of material such as plastic or cardboard covered with a sticky substance. Insects that land on the glue board are caught on the surface of the glue board. Generally, glue boards of this kind need to be replaced on a semi-regular basis (for example, monthly or quarterly). One or more clips, slots, or other fastening devices can be provided within the housing 10 for attaching a glue board to the glue board receiving space of the insect disabling portion 20.

In alternative embodiments, the insect disabling portion 20 can take other forms. For example, the insect disabling portion 20 can comprise one or more electrodes across which a high voltage can be applied. The electrodes can be arranged in the form of a grid. Insects landing on the electrodes are killed by an electrical current passing through the insect, between the electrodes. Insect disabling portions incorporating electrodes of this kind are well known in the field of insect capturing devices and accordingly will not be elaborated upon further herein. It is further noted that a combination of one or more glue boards and/or electrodes (or indeed other kinds of insect disabling features) can be included in the insect disabling portion 20.

In accordance with an embodiment of this invention, the insect capturing device 2 includes a reflection surface 30. In the present example, the insect capturing device 2 includes first and second reflection surfaces 30. These reflection surfaces 30 are provided on either side of the insect disabling portion 20, as best shown in Figure 2. The reflection surfaces 30 are provided to reflect light emitted by one or more LEDs of the insect capturing device 2 out through the housing 10 of the insect capturing device 2. In the present example, the reflected light passes through the grille 12 to attract insects which can then enter the housing 10 through the grille 12 to be captured by the insect disabling portion 20.

As is schematically illustrated in Figures 2, 3, 5 and 8, light emitted by the one or more LEDs is incident upon the reflection surfaces 30 as indicated by the dashed arrows labelled 'A'. The reflected light is schematically illustrated in the figures by the dashed arrows labelled 'B'. In the present example, since two reflection surfaces 30 are provided, it will be appreciated that in the present example, light is reflected outwards from the front of the housing 10 through the grille 12 in more than one direction. This is best illustrated in Figure 2. It is thought that this arrangement can form a catchment area in front of the insect capturing device 2 within which insects are attracted inwards into the insect capturing device through the grille 12. It is envisaged that in some examples a single reflection surface 30 may be provided.

In the present embodiment the insect disabling portion 20 comprises a glue board receiving space for receiving a glue board. Since light emitted by the LEDs can lead to drying of the sticky substance on the surface of the glue board, it is beneficial to take steps to prevent light that emitted by the LEDs from falling on a glue board in the glue board receiving space. This can be achieved in a number of ways. As described further below, means such as reflectors 42 can be provided to channel and/or focus the LED light onto the reflection surfaces 30. Additionally, and as best shown in Figures 2, 3, 5 and 8, a barrier 32 can be positioned between the insect disabling portion and the reflection surface. The barrier 32 can take the form of a lip or flange that extends outwardly from a position at the side of the reflection surface closest to the insect disabling portion 20 to block any stray light emitted by the one or more LEDs. The barrier can also form at least part of the means for retaining the glue board in the glue board receiving space.

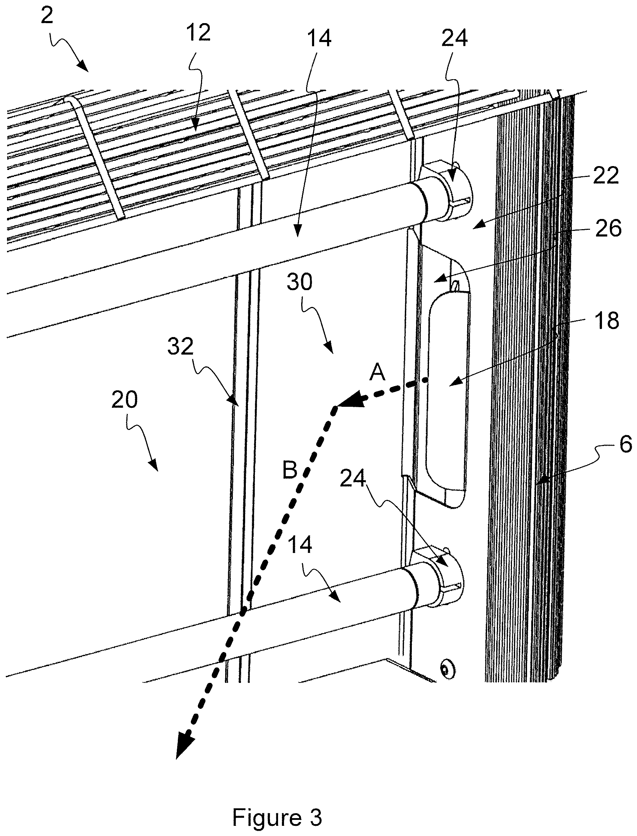

Figures 3 to 8 best illustrate the arrangement and position of the LEDs 40 of the insect capturing device 2. In this example, a plurality of LEDs 40 are provided at each side of the housing 10. The LEDs 40 can be oriented inwards with respect to the housing 10 so that no light emitted by the LEDs 40 can leave the housing 10 directly. Light emitted by the LEDs 40 as indicated by the dashed arrows labelled 'A' generally can only leave the housing 10 by reflection from the reflection surfaces 30. In one embodiment, the LEDs 40 are oriented toward the center of the reflection surfaces 30.

In this embodiment, the LEDs 40 are situated within side sections of the housing 10, behind a side plate 22. In this example, the side plate 22 has an opening 26 that allows light emitted by the LEDs 40 to pass therethrough, to fall on the reflection surfaces 30. In some examples, a blind 18 can be positioned over the LEDs 40 to prevent stray light from the LEDs 40 or their reflectors 42 leaving the housing 10 directly.

In some examples, the LEDs 40 can be provided with features for concentrating or focussing the light that they emit onto the reflection surface 30. In the present embodiment, the LEDs 40 are each provided with a reflector 42 for this purpose. The reflectors 42 can be provided in the form of cones having, for example, a parabolic cross-section. An inner surface of the cone 42 can be provided a reflective surface so that light falling thereon is reflected towards the reflection surface 30. The reflectors can, for example, comprise aluminium. Note that the reflectors 42 can also act as a shroud around the LEDs, to shield the LEDs against direct emission of light from the housing 10.

Figure 5 is a cross-section of the insect capturing device 2 through one of the LEDs 40, its respective reflector 42 and various other features of the device 2. Figure 5 illustrates the orientation of the LEDs towards the reflection surface 30 so that light emitted is directed generally along the dashed arrow labelled 'A'. The angle of incidence of peak intensity of light emitted by the LEDs 40 falling on the reflection surface 30 is indicated by the angle α with respect to a surface normal n of the reflection surface 30. Typically, this angle is in the range from 100° ≤ α ≤ 170°, preferably from 110° ≤ α ≤ 160°, more preferably from 120° ≤ α ≤ 150°, especially preferably from 130° ≤ α ≤ 140° with respect to a surface normal n of the reflection surface. It will be appreciated however, that light emitted by the LEDs and their reflectors 42 will be incident on the reflection surfaces across a range of angles.

In accordance with an embodiment of this invention, the parabolic reflector cone can concentrate the light such that the majority of the light emitted by the LEDs 40 hits the reflection surfaces 30 and is reflected in a manner that causes the majority of the light to be effectively extracted from the insect capturing device 2. Using a reflector in this manner allows the system to have a small form factor that does not occupy a significant amount of lateral or vertical space.

The LEDs used can be selected according to criteria such as their output power and emission spectrum. Traditionally, fluorescent tubes used in insect capturing devices operated at around 350nm, although nowadays tubes operating at around 365nm are almost always used. Accordingly, the LEDs provided in an insect capturing device according to an embodiment of this invention may operate at or around these wavelengths. It has also been found that most insects are also sensitive to light at somewhere around 500nm (Gary D. Bernard and Doekele G. Stavenga, "Spectral Sensitivities of Retinular Cells Measured in Intact, Living Flies by an Optical Method", J. Comp. Physiol. 134, 95-107 (1979)). Accordingly, it is envisaged that LEDs operating at or around this wavelength could be used.

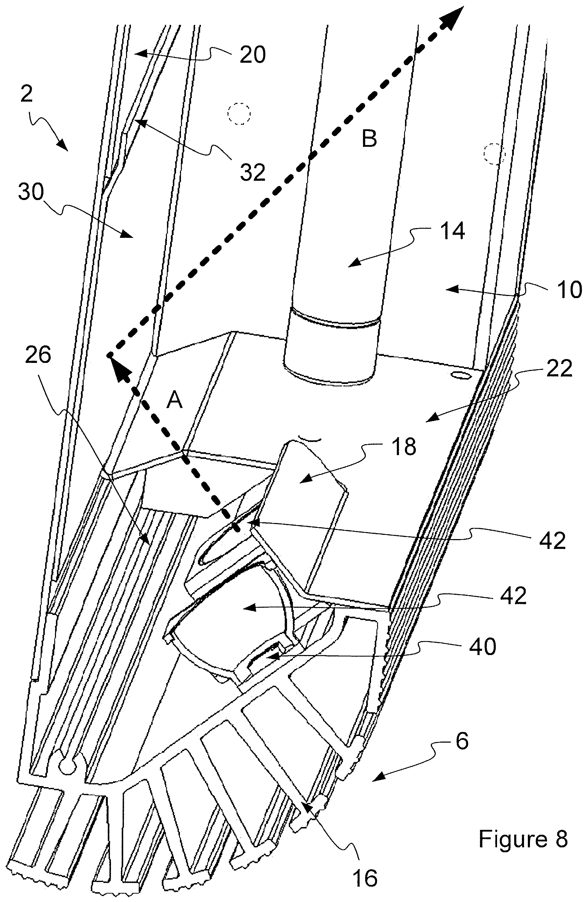

As can best be seen from Figures 5 and 8, light reflected (see the dashed arrow labelled 'B') from the reflection surfaces 30 exits the housing 10 at an angle similar to the angle of incidence. In accordance with an embodiment of the invention, the reflection surfaces 30 can be configured to diffuse the reflected light. This has the advantage of preventing concentrated, reflected light from the LEDs 40 from exiting the housing 10, thereby preventing problems such as those noted above relating to eye or skin damage in a person exposed to the insect capturing device 2. In addition to this, it has been found that insects are particularly attracted to diffuse light in the UV range. The reflection surfaces 30 can, for example, comprise an anodised metallic material for providing a suitable surface for diffuse reflection of the LED light. In the present example, matt anodised aluminium is used.

As is most clearly seen in Figures 5 to 8, the heat sink 6 incorporating a plurality of fins 16 for dissipating heat is provided in thermal communication with the one or more LEDs 40. Typically, devices such as surface mount device LEDs (SMD LEDs) can produce a relatively large amount of heat during operation. The heat sinks 6 can act to dissipate this heat effectively, thereby to prevent overheating. The heat sinks 6 and their associated fins 16 can comprise a different material to the remainder of the housing 10. For example, the fins 16 can comprise a material having a higher thermal conductivity than the material used for the remainder of the housing, thereby to enhance the operation of the heat sinks 6 to dissipate heat produced by the LEDs 40.

As noted above, in some embodiments, the LEDs can be surface mounted devices (SMDs). LEDs of this kind are less prone to ageing, particularly for applications relating to insect capturing devices, since they generally have higher output power, higher power density and have a lower cost per watt of output power than through-bulb LEDs. Through-bulb LEDs also typically include an epoxy coating which can degrade (become cloudy) over time, particularly when exposed to light in the UV spectrum.

In this embodiment, each SMD LED 40 is soldered onto a MCPCB (Metal-Core Printed Circuit Board), which is screwed onto the heat sink 6 via a thermal interface material such as a thermal grease. The heat sink 6 in this embodiment is attached to the back section 8 of the housing 10 using screws 28 or other means.

Where a metallic reflector 42 is used (e.g. aluminium), a PTFE (Polytetrafluoroethylene) washer can be used to insulate the aluminium cone from the solder joints of the LED terminals on the MCPCB. A hollow channel in the washer can allow the wires from the MCPCB to be routed to an LED driver.

In the present example, the insect capturing device 2 is provided with four LEDs 40 and respective reflectors 42. Two LEDs 40 are provided on either end of the insect capturing device 2 for producing light that will fall upon and be reflected outwardly by the respective reflection surfaces 30. The reflection surfaces 30 of the insect capturing device 2 are, in the present example, provided on an interior surface of the housing 10. In the present example, each reflection surface 30 is substantially flat and is located in a plane parallel to the plane of the glue board receiving space of the insect disabling portion 20. In alternative embodiments, the reflection surfaces 30 can be curved to allow light falling thereon to be concentrated to some degree, as it passes out of the grille 12.

In accordance with embodiments of this invention, insects can be captured by providing an insect capturing device of the kind described herein and operating the LEDs to emit light for attracting insects. Over time, it may prove necessary to replenish or replace one or more features of the insect disabling portion 20 such as a glue board. Accordingly, a method according to an embodiment of the invention can include replacing a glue board provided in the insect disabling portion 20 with a replacement glue board. As part of the method, the grille 12 can be pivoted upwards to reveal the interior of a housing 10 to allow access to a glue board receiving space of the insect disabling portion 20.

Accordingly, there has been described an insect capturing device and a method of using the same. The insect capturing device includes a housing. The insect capturing device also includes an insect disabling portion. The insect capturing device also includes one or more light emitting diodes (LEDs) operable to emit light for attracting insects. The insect capturing device further includes a reflection surface. The LEDs are oriented to direct light onto the reflection surface for reflecting the light out from the housing to attract insects onto the insect disabling portion.

Although particular embodiments of the invention have been described, it will be appreciated that many modifications/additions and/or substitutions may be made within the scope of the claimed invention.

## Claims

1. An insect capturing device comprising:
a housing (10);
first and second reflection surfaces (30);
an insect disabling portion (20) located in between the first and second reflection surfaces; and
one or more light emitting diodes (LEDs) (40) operable to emit light for attracting insects;
wherein the LEDs are oriented inwardly with respect to the housing so that light emitted by the LEDs does not leave the housing directly, wherein the LEDs are oriented to direct light onto the reflection surfaces for reflecting said light out from the housing to attract insects onto the insect disabling portion, wherein the light reflected out from the housing by the first reflection surface is directed across the insect disabling portion in a first direction, and wherein the light reflected out from the housing by the second reflection surface is directed across the insect disabling portion in a second direction, thereby to create a region in front of the housing in which insects are attracted inward towards the insect disabling portion.

2. The insect capturing device of claim 1, wherein each reflection surface is located on an interior surface of the housing adjacent the insect disabling portion.

3. The insect capturing device of claim 1 or claim 2, wherein each reflection surface is configured to diffuse the light reflected out from the housing.

4. The insect capturing device of claim 3, wherein each reflection surface comprises a matt anodised metal surface.

5. The insect capturing device of any preceding claim, wherein each reflection surface is substantially flat.

6. The insect capturing device of any of claims 1 to 4, wherein each reflection surface is curved.

7. The insect capturing device of any preceding claim, wherein the LEDs are oriented at an angle in the range from 100° to 170°, preferably from 110° to 160°, more preferably from 120° to 150°, or especially preferably from 130° to 140° with respect to a surface normal **n** of each reflection surface.

8. The insect capturing device of any preceding claim, further comprising a reflector for directing light emitted by the LEDs onto each reflection surface.

9. The insect capturing device of claim 8, wherein the reflector comprises a reflector cone (42).

10. The insect capturing device of any preceding claim comprising a barrier (32) positioned between the insect disabling portion and each reflection surface for preventing light emitted by the LEDs from falling on a glue board received in the insect disabling portion.

11. The insect capturing device of any preceding claim, wherein the LEDs comprise surface-mounted devices (SMDs).

12. The insect capturing device of claim 11 comprising one or more heat sinks (6) in thermal contact with the housing and the LEDs.

13. The insect capturing device of any preceding claim, wherein the insect disabling portion comprises a glue board receiving space.

14. A method for capturing insects, the method comprising:
providing an insect capturing device according to any preceding claim, the insect capturing device having an insect disabling portion;
operating the LEDs to emit light for attracting insects.

15. The method of claim 14 further comprising replacing a glue board provided in the insect disabling portion with a replacement glue board.

## Patentansprüche

1. Insektenfangvorrichtung, umfassend:
ein Gehäuse (10);
erste und zweite Reflexionsoberfläche (30);
einen Insektenvernichtungsabschnitt (20), der sich zwischen der ersten und der zweiten Reflexionsoberfläche befindet; und
eine oder mehrere Leuchtdioden (LEDs) (40), die funktionsfähig sind, um Licht zum Anziehen von Insekten auszusenden;
wobei die LEDs in Bezug auf das Gehäuse nach innen ausgerichtet sind, so dass von den LEDs emittiertes Licht das Gehäuse nicht direkt verlässt, wobei die LEDs so ausgerichtet sind, um Licht auf die Reflexionsoberflächen zu lenken, um das Licht aus dem Gehäuse heraus zu reflektieren, um Insekten auf den Insektenvernichtungsabschnitt anzuziehen, wobei das von der ersten Reflexionsoberfläche aus dem Gehäuse heraus reflektierte Licht in einer ersten Richtung über den Insektenvernichtungsabschnitt gelenkt wird, und wobei das von der zweiten Reflexionsoberfläche aus dem Gehäuse heraus reflektierte Licht in einer zweiten Richtung über den Insektenvernichtungsabschnitt gelenkt wird, um dadurch einen Bereich vor dem Gehäuse zu schaffen, in dem Insekten nach innen zum Insektenvernichtungsabschnitt hin angezogen werden.

2. Insektenfangvorrichtung nach Anspruch 1, wobei sich jede Reflexionsoberfläche an einer inneren Oberfläche des Gehäuses angrenzend an den Insektenvernichtungsabschnitt befindet.

3. Insektenfangvorrichtung nach Anspruch 1 oder 2, wobei jede Reflexionsoberfläche ausgestaltet ist, um das aus dem Gehäuse reflektierte Licht zu streuen.

4. Insektenfangvorrichtung nach Anspruch 3, wobei jede Reflexionsoberfläche eine matte eloxierte Metalloberfläche umfasst.

5. Insektenfangvorrichtung nach einem der vorhergehenden Ansprüche, wobei jede Reflexionsoberfläche im Wesentlichen flach ist.

6. Insektenfangvorrichtung nach einem der Ansprüche 1 bis 4, wobei jede Reflexionsoberfläche gekrümmt ist.

7. Insektenfangvorrichtung nach einem der vorhergehenden Ansprüche, wobei die LEDs in einem Winkel im Bereich von 100° bis 170°, vorzugsweise von 110° bis 160°, bevorzugter von 120° bis 150° oder besonders bevorzugt von 130° bis 140° in Bezug auf eine Oberflächennormale n jeder Reflexionsoberfläche ausgerichtet sind.

8. Insektenfangvorrichtung nach einem der vorhergehenden Ansprüche, die ferner einen Reflektor umfasst, um das von den LEDs emittierte Licht auf jede Reflexionsoberfläche zu lenken.

9. Insektenfangvorrichtung nach Anspruch 8, wobei der Reflektor einen Reflektorkegel (42) umfasst.

10. Insektenfangvorrichtung nach einem der vorhergehenden Ansprüche, umfassend eine Barriere (32), die zwischen dem Insektenvernichtungsabschnitt und jeder Reflexionsoberfläche angeordnet ist, um zu verhindern, dass von den LEDs emittiertes Licht auf eine Klebstoffplatte fällt, die in dem Insektenvernichtungsabschnitt aufgenommen ist.

11. Insektenfangvorrichtung nach einem der vorhergehenden Ansprüche, wobei die LEDs oberflächenmontierte Vorrichtungen (SMDs) umfassen.

12. Insektenfangvorrichtung nach Anspruch 11, die eine oder mehrere Wärmesenken (6) in thermischem Kontakt mit dem Gehäuse und den LEDs umfasst.

13. Insektenfangvorrichtung nach einem der vorhergehenden Ansprüche, wobei der Insektenvernichtungsabschnitt einen Klebstoffplattenaufnahmeraum umfasst.

14. Verfahren zum Fangen von Insekten, wobei das Verfahren umfasst:
Bereitstellen einer Insektenfangvorrichtung gemäß irgendeinem vorhergehenden Anspruch, wobei die Insektenfangvorrichtung einen Insektenvernichtungsabschnitt aufweist;
Betreiben der LEDs, um Licht zum Anziehen von Insekten zu emittieren.

15. Verfahren nach Anspruch 14, das ferner ein Ersetzen einer in dem Insektenvernichtungsabschnitt bereitgestellten Klebstoffplatte durch eine Ersatzklebstoffplatte umfasst.

## Revendications

1. Dispositif de capture d'insectes comprenant :
un boîtier (10) ;
des première et deuxième surfaces de réflexion (30) ;
une partie paralysant les insectes (20) située entre les première et deuxième surfaces de réflexion ; et
une ou plusieurs diode(s) électroluminescente(s) (LED) (40) pouvant fonctionner pour émettre de la lumière pour attirer les insectes ;
dans lequel les LED sont orientées vers l'intérieur par rapport au boîtier de sorte que la lumière émise par les LED ne quitte pas directement le boîtier, où les LED sont orientées de façon à diriger la lumière sur les surfaces de réflexion pour réfléchir ladite lumière hors du boîtier pour attirer les insectes sur la partie paralysant les insectes, où la lumière réfléchie hors du boîtier par la première surface de réflexion est dirigée à travers la partie paralysant les insectes dans une première direction, et où la lumière réfléchie hors du boîtier par la deuxième surface de réflexion est dirigée à travers la partie paralysant les insectes dans une deuxième direction, pour créer ainsi une région devant le boîtier dans laquelle les insectes sont attirés vers l'intérieur en direction de la partie paralysant les insectes.

2. Dispositif de capture d'insectes de la revendication 1, dans lequel chaque surface de réflexion est située sur une surface intérieure du boîtier adjacente à la partie paralysant les insectes.

3. Dispositif de capture d'insectes de la revendication 1 ou 2, dans lequel chaque surface de réflexion est configurée pour diffuser la lumière réfléchie hors du boîtier.

4. Dispositif de capture d'insectes de la revendication 3, dans lequel chaque surface de réflexion comprend une surface métallique anodisée mate.

5. Dispositif de capture d'insectes de l'une des revendications précédentes, dans lequel chaque surface de réflexion est essentiellement plate.

6. Dispositif de capture d'insectes de l'une des revendications 1 à 4, dans lequel chaque surface de réflexion est incurvée.

7. Dispositif de capture d'insectes de l'une des revendications précédentes, dans lequel les LED sont orientées selon un angle situé dans la plage allant de 100° à 170°, de préférence de 110° à 160°, plus préférablement de 120° à 150°, ou de manière particulièrement préférée de 130° à 140° par rapport à une normale à la surface n de chaque surface de réflexion.

8. Dispositif de capture d'insectes de l'une des revendications précédentes, comprenant en outre un réflecteur pour diriger la lumière émise par les LED sur chaque surface de réflexion.

9. Dispositif de capture d'insectes de la revendication 8, dans lequel le réflecteur comprend un cône réflecteur (42).

10. Dispositif de capture d'insectes de l'une des revendications précédentes, comprenant une barrière (32) positionnée entre la partie paralysant les insectes et chaque surface de réflexion pour empêcher la lumière émise par les LED d'arriver sur un panneau collant reçu dans la partie paralysant les insectes.

11. Dispositif de capture d'insectes de l'une des revendications précédentes, dans lequel les LED comprennent des dispositifs montés en surface (SMD).

12. Dispositif de capture d'insectes de la revendication 11, comprenant un ou plusieurs dissipateur(s) thermique(s) (6) en contact thermique avec le boîtier et les LED.

13. Dispositif de capture d'insectes de l'une des revendications précédentes, dans lequel la partie paralysant les insectes comprend un espace de réception de panneau collant.

14. Procédé de capture d'insectes, le procédé comprenant le fait :
de fournir un dispositif de capture d'insectes selon l'une des revendications précédentes, le dispositif de capture d'insectes ayant une partie paralysant les insectes ;
de faire fonctionner les LED pour émettre de la lumière pour attirer les insectes.

15. Procédé de la revendication 14, comprenant en outre le fait de remplacer un panneau collant prévu dans la partie paralysant les insectes par un panneau collant de remplacement.
